(19) 

Europäisches Patentamt

European Patent Office

Office européen des brevets

(11)  **EP 4 786 532 A1**

(12)  **EUROPEAN PATENT APPLICATION**

(43) Date of publication:
**05.08.2026  Bulletin 2026/32**

(21) Application number: **25190647.5**

(22) Date of filing: **21.07.2025**

(51) International Patent Classification (IPC):
***C08J 9/00*** (2006.01)      ***B29C 44/34*** (2006.01)
***C08J 9/18*** (2006.01)

(52) Cooperative Patent Classification (CPC):
**C08J 9/18; B29C 44/3461; C08J 9/0023;**
**C08J 9/0038;** B29K 2023/12; C08J 9/0066;
C08J 9/232; C08J 2300/30; C08J 2323/10;
C08J 2323/14; C08J 2423/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.01.2025 JP 2025015459**

(71) Applicants:
• **JSP International SARL**
  **60190 Estrées-Saint-Denis (FR)**

• **JSP Corporation**
  **Tokyo 100-0005 (JP)**

(72) Inventors:
• **Kopf, Valentin**
  **60190 Estrées-Saint-Denis (FR)**
• **Pereira, Antonio**
  **60190 Estrées-Saint-Denis (FR)**
• **Hira, Akinobu**
  **Tokyo, 1000005 (JP)**

(74) Representative: **Hafner & Kohl PartmbB**
  **Schleiermacherstraße 25**
  **90491 Nürnberg (DE)**

(54)  **POLYPROPYLENE-BASED RESIN FOAMED PARTICLES**

(57)      [Problems] To provide polypropylene-based resin foamed particles which include a recycled polypropylene and can suppress the deterioration rate of the physical properties of a polypropylene-based resin foamed molded article over time, thereby maintaining the favorable physical properties of the molded article over a long period.

[Resolution means] The polypropylene-based resin foamed particles contain 50 mass% or more of a recycled polypropylene-based resin (R). The oxidation induction time t of the polypropylene-based resin foamed particles at 200°C, as measured in accordance with ISO 11357-6:2018, is 5 minutes or more and 360 minutes or less.

[Fig. 1]

(Fig. 1)

EP 4 786 532 A1

**Description**

[Technical field]

The present invention relates to polypropylene-based resin foamed particles.

[Background art]

Molded articles of polypropylene-based resin foam particles are lightweight and exhibit excellent cushioning properties, rigidity, etc., leading to their use in various applications such as packaging materials, containers, and cushioning materials. For example, such foamed molded articles of polypropylene-based resin foam particles are produced by a method referred to as in-mold molding, in which polypropylene-based resin foamed particles are filled into a mold and heated with steam. With the in-mold molding method, when steam is supplied into the mold to heat the foamed particles, the foamed particles soften and undergo secondary foaming. As a result, the foamed particles within the mold fuse together, forming a molded article that conforms to the shape of the cavity of the mold.

In recent years, from the perspective of reducing environmental impact and promoting a recycling-oriented society, there has been a demand from end users to recycle post-use waste and utilize it as recycled materials (so-called pre- or post-consumer materials). For example, Patent Document 1 discloses a method for producing a foamed molded article of polyolefin-based resin, the method comprising: (a) shredding a waste foamed polyolefin-based resin molded article into a size of 1 mm or larger and 30 mm or smaller, and pelletizing the material using an extruder to obtain waste polyolefin-based resin pellets; (b) mixing the waste polyolefin-based resin pellets with a virgin polyolefin-based resin and re-pelletizing using an extruder; (c) impregnating the pellets with a foaming agent in an aqueous dispersion system and foaming them to produce pre-foamed particles; and (d) producing a foamed molded article of polyolefin-based resin using the pre-foamed particles.

[Prior Art Documents]

[Patent Documents]

[Patent Document 1] JP 2005-297464 A

[Summary of the Invention]

[Problems to be Solved by the Invention]

However, recycled polypropylene-based resins derived from pre- or post-consumer materials may undergo greater degradation than virgin polypropylene-based resins due to the thermal history to which they are subjected during the recycling process. Accordingly, the greater the amount of recycled polypropylene-based resin contained in the molded article, the more likely it was that physical properties such as tensile strength and compressive strength would deteriorate over time depending on the usage environment. This tendency was particularly pronounced when using polypropylene-based resins derived from post-consumer materials, as when the blend ratio of polypropylene resin derived from post-consumer materials was high, the molded article was prone to degradation and its physical properties deteriorated at an early stage depending on the usage environment.

The present invention has been created in view of the above background, with the object of providing polypropylene-based resin foamed particles, which include a recycled polypropylene-based resin and can suppress the deterioration rate of the physical properties of a polypropylene-based resin foamed molded articles over time, thereby maintaining the favorable physical properties of the molded article over a long period.

[Means for Solving the Problems]

One aspect of the present invention relates to the polypropylene-based resin foamed particles according to [1] to [13] below.

[1] Polypropylene-based resin foamed particles, comprising 50 mass% or more of a recycled polypropylene-based resin (R),
wherein the oxidation induction time of the foamed particles at 200°C, as measured in accordance with ISO 11357-6:2018, is 5 minutes or more and 360 minutes or less.
[2] The polypropylene-based resin foamed particles according to [1], wherein the content of carbon black in the polypropylene-based resin (R) is less than 0.5 mass% (including 0).

[3] The polypropylene-based resin foamed particles according to [1] or [2], wherein the content of carbon black in the foamed particles is 0.5 mass% or more and 5 mass% or less.

[4] The polypropylene-based resin foamed particles according to [1] or [2], wherein the content of carbon black in the foamed particles is less than 0.5 mass% (including 0).

[5] The polypropylene-based resin foamed particles according to any one of [1] to [4], wherein the melting point of the polypropylene-based resin (R) is 150°C or lower.

[6] The polypropylene-based resin foamed particles according to any one of [1] to [5], wherein the melt mass flow rate of the polypropylene-based resin (R), measured under the conditions of a 2.16 kg load and a temperature of 230°C, is 5 g/10 min or more and 20 g/10 min or less.

[7] The polypropylene-based resin foamed particles according to any one of [1] to [6], wherein the content of phenol-based antioxidants in the foamed particles is 0.005 mass% or more and 0.5 mass% or less.

[8] The polypropylene-based resin foamed particles according to any one of [1] to [7], wherein the content of phosphorus-based antioxidants in the foamed particles is 0.001 mass% or more and 0.3 mass% or less.

[9] The polypropylene-based resin foamed particles according to any one of [1] to [8], wherein the polypropylene-based resin (R) is derived from a post-consumer material of a polypropylene-based resin foamed molded article.

[10] The polypropylene-based resin foamed particles according to any one of [1] to [9], wherein the polypropylene-based resin (R) is composed of one or more polypropylene-based resins selected from the group consisting of ethylene-propylene random copolymers, propylene-butene random copolymers, and ethylene-propylene-butene random copolymers.

[11] The polypropylene-based resin foamed particles according to any one of [1] to [10], wherein the foamed particles contain a polypropylene-based resin (A) composed of a virgin polypropylene-based resin, the blend ratio of the polypropylene-based resin (A) in the foamed particles is 0.5 mass% or more and 50 mass% or less, and the blend ratio of the polypropylene-based resin (R) is 50 mass% or more and 99.5 mass% or less (provided that the total of the blend ratios of the polypropylene-based resin (R) and the polypropylene-based resin (A) is 100 mass%.)

[12] The polypropylene-based resin foamed particles according to any one of [1] to [11], wherein the foamed particles contain 75 mass% or more of the polypropylene-based resin (R).

[13] The polypropylene-based resin foamed particles according to any one of [1] to [12], wherein the oxidation induction time of the foamed particles, as measured in accordance with ISO 11357-6:2018, is 30 minutes or more and 360 minutes or less.

[Effects of the Invention]

According to the above aspects, it is possible to provide polypropylene-based resin foamed particles, which include a recycled polypropylene-based resin and can suppress the deterioration rate of the physical properties of a polypropylene-based resin foamed particles molded article (hereinafter, referred to as a "molded article") over time, thereby maintaining the favorable physical properties of the molded article over a long period.

[Brief Description of the Drawings]

Fig. 1 is an explanatory diagram illustrating an example of an oxidation induction time curve of the polypropylene-based resin foamed particles.

Fig. 2 is an explanatory diagram illustrating an example of an oxidation induction temperature curve of the polypropylene-based resin (R).

Fig. 3 is an explanatory diagram illustrating a method for calculating the melting enthalpy at a high-temperature peak.

[Embodiments of the Invention]

(Polypropylene-based resin foamed particles)

The polypropylene-based resin foamed particles (hereinafter, also referred to as "foamed particles") contain 50 mass% or more of a recycled polypropylene-based resin (R). Moreover, the oxidation induction time of the foamed particles at 200°C, as measured in accordance with ISO 11357-6:2018, is 5 minutes or more and 360 minutes or less. Thus, if the oxidation induction time of the foamed particles is within the specified range, it is possible to suppress deterioration in the physical properties of the molded article over a long period, even though they contain recycled polypropylene-based resin (R) as a main component.

If the oxidation induction time of the foamed particles is too short, the molded article may degrade over time more easily, and depending on the usage environment, the physical properties of the molded article may deteriorate prematurely. If the oxidation induction time of the foamed particles is 5 minutes for more, it is possible to suppress deterioration in the physical properties of the molded article over a long period. From the perspective to further enhance such effects, the oxidation induction time of the foamed particles is preferably 8 minutes or more, more preferably 10 minutes or more, still more preferably 20 minutes or more, even more preferably 30 minutes or more, particularly preferably 40 minutes or more, and most preferably 50 minutes or more.

In contrast, if the oxidation induction time of the foamed particles becomes excessively long, the in-mold moldability of the foamed particles may deteriorate. More specifically, the shape of the molded article obtained by in-mold molding of the foamed particles is easily distorted, potentially leading to a deterioration in resilience. By setting the oxidation induction time of the foamed particles to 360 minutes or less, preferably 300 minutes or less, more preferably 240 minutes or less, still more preferably 200 minutes or less, particularly preferably 160 minutes or less, and most preferably 120 minutes or less, it is possible to easily avoid deterioration in the in-mold moldability of the foamed particles.

In order to define the preferable range of the oxidation induction time of the foamed particles, the upper and lower limits of the oxidation induction time described above can be arbitrarily combined. For example, the preferable range of the oxidation induction time of the foamed particles may be 8 minutes or more and 360 minutes or less, 10 minutes or more and 300 minutes or less, 20 minutes or more and 240 minutes or less, 30 minutes or more and 200 minutes or less, 40 minutes or more and 160 minutes or less, or 50 or more minutes to 120 minutes or less.

The oxidation induction time of the foamed particles is measured by performing differential scanning calorimetry (DSC) in accordance with ISO 11357-6:2018, using approximately 5 mg of foamed particles as a sample. More specifically, the sample is first disposed in an open sample pan, then disposed on the sample stage of the DSC apparatus. Next, nitrogen gas with a purity of 99.99% or more is supplied into the furnace of the DSC apparatus to replace the atmosphere inside the furnace with nitrogen. Note that the flow rate of the nitrogen gas is set to 50 mL/min.

Once the furnace atmosphere is fully replaced with nitrogen gas, the sample is heated to 200°C at a rate of 10°C/min while continuing to supply nitrogen gas. Then, after maintaining the temperature at 200°C for 3 minutes, the supply of nitrogen gas is stopped and air is introduced into the furnace. Note that the air flow rate is set to 50 mL/min. Subsequently, the temperature is maintained at 200°C and air is continuously supplied. Subsequently, the heat flow of the sample is monitored until the exothermic peak due to oxidative degradation is observed.

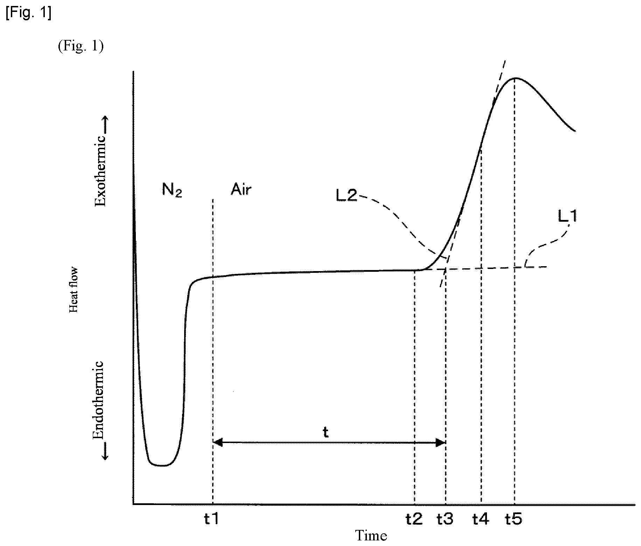

Fig. 1 is a schematic diagram of an oxidation induction time curve, with the thus-obtained heat flow plotted on the vertical axis and the elapsed time from the start of the test plotted on the horizontal axis. As illustrated in Fig. 1, from the time t1 at which air is introduced into the furnace to the time t2 at which oxidative decomposition of the sample begins, no endothermic or exothermic reaction occurs in the sample, so the portion of the curve between t1 and t2 is substantially flat. In contrast, when the sample begins oxidative decomposition at the time t2, an exothermic peak due to decomposition appears. Note that the endothermic peak appearing prior to the time t1 in the oxidation induction time curve is a peak derived from the melting of the polypropylene-based resin constituting the foamed particles.

In order to determine the oxidation induction time of the foamed particles, first, the time t4 at which the slope of the tangent to the oxidation induction time curve is greatest between the time t2 and the time t5 corresponding to the peak apex is determined. A baseline extension line L1 is then drawn from the time t2 on the oxidation induction time curve, while a tangent line L2 is drawn at the time t4 on the oxidation induction time curve. Then, the oxidation induction time t of the foamed particles is defined as the time from t1 to t3, with t3 corresponding to the intersection of the extension line L1 and the tangent line L2. Note that the oxidation induction time is also referred to as the isothermal OIT.

The oxidation induction time of the foamed particles can be extended, for example, by blending a polypropylene-based resin (R) with a high oxidation induction temperature, as described later, into the foamed particles. Moreover, assuming that the oxidation induction temperature of the polypropylene-based resin (R) is high, the oxidation induction time of the foamed particles can be further extended using a method involving blending a polypropylene-based resin (R) having a higher oxidation induction temperature into the foamed particles, blending carbon black into the foamed particles, blending virgin polypropylene-based resin into the foamed particles, etc. Moreover, assuming that the oxidation induction temperature of the polypropylene-based resin (R) blended in the resin particles is high, the oxidation induction time of the foamed particles can be moderately shortened by a method involving moderately reducing the amount of antioxidant added to the polypropylene-based resin (R) in the antioxidant adding step described below or moderately reducing the amount of antioxidant added to the resin particles in the step of producing resin particle , etc.

[Polypropylene-based resin (R)]

The foamed particles contain at least a recycled polypropylene-based resin (R). The foamed particles may contain one type of polypropylene-based resin (R) or two or more types of polypropylene-based resin (R). The content of polypropylene-based resin in the polypropylene-based resin (R) is preferably 60 mass% or more, more preferably 70 mass% or more, still more preferably 80 mass% or more, particularly preferably 90 mass% or more, and most preferably 95 mass% or more.

The content of polypropylene-based resin (R) in the foamed particles is 50 mass% or more. Since the foamed particles have an oxidation induction time within the specified range, even when they contain a high ratio of 50 mass% or more of the polypropylene-based resin (R), it is possible to suppress deterioration in the physical properties of the molded article over a long period. From the perspective of suppressing deterioration in the physical properties of the molded article over a long period while further contributing to the reduction of environmental impact, the foamed particles preferably contain 60 mass% or more of the polypropylene-based resin (R), more preferably 75 mass% or more, still more preferably 80 mass% or more, even more preferably 85 mass% or more, particularly preferably 90 mass% or more, and most preferably 95 mass% or more. Note that the upper limit of the ratio of the polypropylene-based resin (R) contained in the foamed particles is, for example, 100 mass%, and, for example, 99 mass% or less.

In the present specification, the term "polypropylene-based resin" refers to a homopolymer of propylene and a propylene-based copolymer having a propylene component (i.e., a monomer component derived from propylene) content of 50 mass% or more.

Exemplary homopolymers of propylene include isotactic polypropylene, syndiotactic polypropylene, atactic polypropylene, etc. Exemplary polypropylene-based copolymers include copolymers of propylene with ethylene and/or $\alpha$-olefins having 4 or more and 8 or less carbon atoms such as propylene-ethylene copolymers, propylene-butene copolymers, and propylene-ethylene-butene copolymers, as well as propylene-acrylic acid copolymers and propylene-maleic anhydride copolymers, etc. The aspect of copolymerization in the polypropylene-based copolymer is not particularly limited. For example, the polypropylene-based copolymer may be a random copolymer, a block copolymer, or a graft copolymer. Moreover, the polypropylene-based resin may also include branched structures introduced, for example, by reacting with a conjugated diene compound and a radical polymerization initiator.

The polypropylene-based resin (R) is preferably composed of a random copolymer and more preferably composed of one or more polypropylene-based resins selected from the group consisting of ethylene-propylene random copolymers, propylene-butene random copolymers, and ethylene-propylene-butene random copolymers. In this case, even when the blend ratio of the polypropylene-based resin (R) in the foamed particles is increased, it is possible to more easily avoid a decrease in foamability and in-mold moldability.

In the present specification, "recycling" refers to the process of using polypropylene-based resin recycled from waste as a raw material for foamed particles. The process of recycling polypropylene-based resin from waste may include, for example, sorting and volume reduction of the waste, extraction of the polypropylene-based resin from the waste, etc. Moreover, the recycling process of the recycled polypropylene-based resin may include, for example, steps such as crushing the recycled material, adding additives, and granulation. Therefore, the "recycled polypropylene-based resin (R)" may also be referred to as a "polypropylene-based resin (R) derived from recycled polypropylene-based resin."

The polypropylene-based resin (R) is composed of a recycled polypropylene-based resin. Moreover, the polypropylene-based resin (R) may include virgin polypropylene-based resins, etc. that are added during the recycling process of the recycled polypropylene-based resin. The virgin polypropylene-based resin may include, for example, the base resin of the masterbatch used for adding an antioxidant during the recycling process of the recycled polypropylene-based resin or during the antioxidant addition step described below. From the perspective of increasing the content of the recycled polypropylene-based resin in the foamed particles and obtaining more environmentally friendly foamed particles, the blend ratio of the recycled polypropylene-based resin in the polypropylene-based resin (R) is preferably 90 mass% or more, more preferably 93 mass% or more, and even more preferably 95 mass% or more.

As the recycled polypropylene-based resin, a pre-consumer (or post-industrial) or a post-consumer material composed of a polypropylene-based resin can be used. In this specification, the terms "pre-consumer" and "post-consumer material", respectively, refers to the material defined in JIS Q14021:2000 as "materials removed from the waste stream of a manufacturing process, excluding reuse of non-conforming products, non-conforming products for grinding, scrap, etc. that can be reused in the same process in which they were generated" and "materials generated from households, or materials resulting from products that can no longer be used for their originally intended purpose by commercial facilities, industrial facilities, or institutional facilities as end-users." Post-consumer materials also include materials returned from distribution channels. Exemplary post-consumer materials may be such as post-consumer materials from polypropylene-based resin foamed particles molded articles, post-consumer materials retrieved from home appliances, from automobiles, or from automobile shredder residues.

Note that, in the present specification, the term "polypropylene-based resin foamed molded article" refers to a foamed article composed of a polypropylene-based resin. Exemplary polypropylene-based resin foamed molded articles include polypropylene-based resin foam particle molded articles obtained by in-mold molding of polypropylene-based resin foamed particles and a polypropylene-based resin extrusion foamed articles obtained by extruding and foaming a polypropylene-based resin from an extruder.

The polypropylene-based resin (R) is preferably derived from post-consumer materials of polypropylene-based resin foamed molded articles and more preferably from post-consumer materials of polypropylene-based resin foam particle molded articles. Such a polypropylene-based resin (R) has properties suitable for producing foamed particles.

Therefore, in this case, the blend ratio of the polypropylene-based resin (R) in the foamed particles can be further increased while maintaining favorable foamability. Furthermore, by reusing post-consumer materials of polypropylene-based resin foamed molded articles as raw materials for the foamed particles, horizontal recycling from polypropylene-based resin foamed molded articles to polypropylene-based resin foamed molded articles can be promoted, thereby contributing to the advancement of a circular economy.

From the perspective of further increasing the blend ratio of the polypropylene-based resin (R) in the foamed particles while maintaining good foamability during production of the foamed particles and good moldability during in-mold molding, the polypropylene-based resin (R) is more preferably derived from post-consumer materials of a polypropylene-based resin foamed molded article, with the post-consumer material composed of one or more polypropylene-based resins selected from the group consisting of ethylene-propylene random copolymers, propylene-butene random copolymers, and ethylene-propylene-butene random copolymers.

From the perspective of maintaining the in-mold moldability of the foamed particles and reliably suppressing any excessive increase in molding pressure during the production of the molded article, even when the blend amount of the polypropylene-based resin (R) is large, the melting point of the polypropylene-based resin (R) is preferably lower than 160°C, more preferably 158°C or lower, still more preferably 155°C or lower, even more preferably 152°C or lower, particularly preferably 150°C or lower, and most preferably lower than 150°C. In contrast, from the perspective to more reliably achieve the effect of enhancing heat resistance and suppressing deterioration in the physical properties of the molded article over time, the melting point of the polypropylene-based resin (R) is preferably 130°C or higher, more preferably 132°C or higher, further preferably 135°C or higher, even more preferably 138°C or higher, particularly preferably 140°C or higher, and most preferably over 140°C.

In order to define the preferred range of the melting point of the polypropylene-based resin (R), the upper and lower limits of the melting point of the polypropylene-based resin (R) described above can be arbitrarily combined. The preferred range of the melting point of the polypropylene-based resin (R) may be, for example, 130°C or higher and lower than 160°C, 132°C or higher and 158°C or lower, 135°C or higher and 155°C or lower, 138°C or higher and 152°C or lower, 140°C or higher and 150°C or lower, or greater than 140°C and lower than 150°C.

The melting point of the polypropylene-based resin (R) can be determined by performing differential scanning calorimetry (i.e., DSC) based on JIS K7121-1987 and using the obtained DSC curve. Specifically, a test specimen composed of the polypropylene-based resin (R) is prepared and the state thereof is conditioned in accordance with "(2) In the case of measuring the melting temperature after performing a certain heat treatment." The heating rate and cooling rates for conditioning are set to 10°C/min, while the temperature range is set from 30°C to 200°C. The conditioned test specimen in this way is heated from 30°C to 200°C at a rate of 10°C/min to obtain the DSC curve. In addition, the apex temperature of the melting peak that appears in the DSC curve is defined as the melting point of the polypropylene-based resin (R). Note that if multiple melting peaks appear in the DSC curve, the apex temperature of the melting peak with the largest area is defined as the melting point.

Preferably, the melt mass flow rate of the polypropylene-based resin (R), measured under the conditions of a 2.16 kg load and a temperature of 230°C in accordance with JIS K7210-1:2014, is 5 g/10 min or more and 20 g/10 min or less. In this case, the blend ratio of the polypropylene-based resin (R) in the foamed particles can be further easily increased while maintaining favorable foamability. From the perspective to achieve such effects more reliably, the melt mass flow rate of the polypropylene-based resin (R), measured under the conditions of a 2.16 kg load and a temperature of 230°C in accordance with JIS K7210-1:2014, is more preferably 6 g/10 min or more and 18 g/10 min or less, and even more preferably 7 g/10 min or more and 15 g/10 min or less.

Exemplary methods for adjusting the melt mass flow rate of the polypropylene-based resin (R) within the above range include a method involving adjusting the amount of shear applied to the polypropylene-based resin (R) by controlling the screw rotation speed of the extruder during the recycling process and a method involving adding a phosphorus-based antioxidant as an antioxidant to the polypropylene-based resin (R) in the antioxidant addition step described below.

The oxidation induction temperature of the polypropylene-based resin (R), as measured in accordance with ISO11357-6:2018, is preferably 220°C or higher. In this case, the blend ratio of the polypropylene-based resin (R) in the foamed particles can be further increased without impairing the effect of suppressing deterioration in the physical properties of the molded article over time. From the perspective of further enhancing such effects, the oxidation induction temperature of the polypropylene-based resin (R) is preferably 222°C or higher, more preferably 225°C or higher, still more preferably 228°C or higher, particularly preferably 230°C or higher, and most preferably 232°C or higher. In contrast, from the perspective of further enhancing the in-mold moldability of the foamed particles, the oxidation induction temperature of the polypropylene-based resin (R) is preferably 280°C or lower, more preferably 270°C or lower, still more preferably 260°C or lower, particularly preferably 255°C or lower, and most preferably 250°C or lower.

In order to define a preferred range of oxidation induction temperatures for the polypropylene-based resin (R), the upper and lower limits of the oxidation induction temperatures of the polypropylene-based resin (R) described above may be arbitrarily combined. For example, the preferred range for the oxidation induction temperature of the polypropylene-based resin (R) may be 220°C or higher and 280°C or lower, 222°C or higher and 270°C or lower, 225°C or higher and 260°C or lower, 228°C or higher and 255°C or lower, 230°C or higher and 250°C or lower, or 232°C or higher and 250°C or lower.

The oxidation induction temperature of the polypropylene-based resin (R) is measured by performing differential scanning calorimetry (DSC) in accordance with ISO 11357-6:2018, using approximately 5 mg of the polypropylene-based resin (R) as a sample. More specifically, the sample is first disposed in an open sample pan, then disposed on the sample stage of the DSC apparatus. Next, air is supplied into the furnace of the DSC apparatus to replace the atmosphere inside the furnace with air. Note that the air flow rate is set to 50 mL/min.

Once the atmosphere in the furnace is filled with air, the sample is heated at a rate of 10°C/min and the heat flow of the sample is measured up to a temperature that is 30°C or higher than the peak of the exothermic reaction caused by oxidative degradation of the sample.

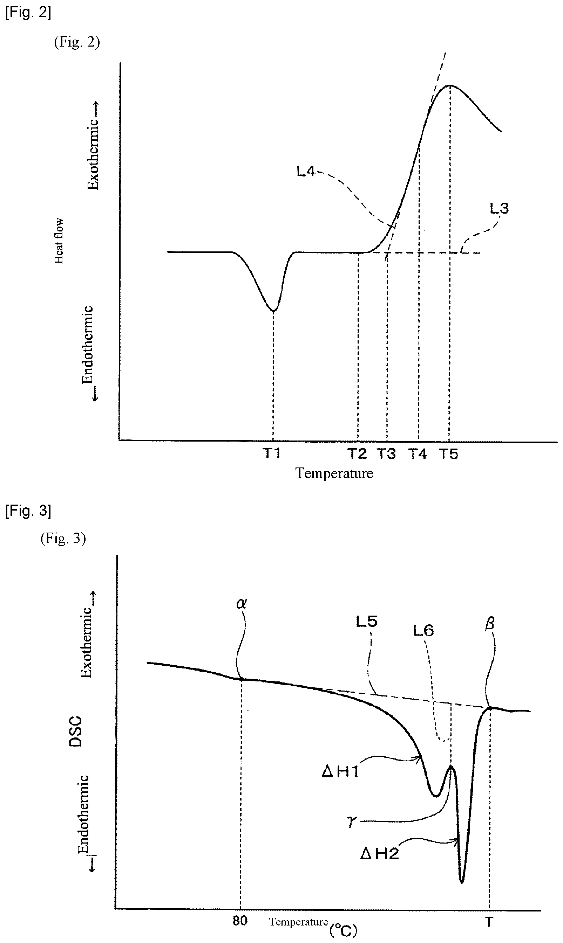

Fig. 2 is a schematic diagram of an oxidation induction temperature curve, with the thus-obtained heat flow plotted on the vertical axis and the heating temperature plotted on the horizontal axis. As illustrated in Fig. 2, the oxidation induction temperature curve from the beginning of heating to the onset of melting of the sample is generally flat in shape. When the sample melts, an endothermic peak with an apex at melting point T1 appears. After the endothermic peak appears, the oxidation induction temperature curve remains flat until oxidative degradation of the sample begins. Thereafter, when the sample begins oxidative degradation at the temperature T2, an exothermic peak associated with oxidative degradation appears.

In order to determine the oxidation induction temperature of the polypropylene-based resin (R), the temperature T4 is first identified within the range from the temperature T2 to the temperature T5 corresponding to the apex of the exothermic peak, where the slope of the tangent to the oxidation induction temperature curve is steepest. Then, an extended baseline L3 of the oxidation induction temperature curve from the temperature T2 and a tangent line L4 at the temperature T4 are drawn on the oxidation induction temperature curve. Then, the temperature T3 corresponding to the intersection of the extended baseline L3 and the tangent line L4 is defined as the oxidation induction temperature of the polypropylene-based resin (R). Note that the oxidation induction temperature may also be referred to as the dynamic OIT or oxidation onset temperature (OOT).

Exemplary methods for further increasing the oxidation induction temperature of the polypropylene-based resin (R) include a method involving blending an antioxidant such as a phenol-based antioxidant into the polypropylene-based resin (R), etc. Specifically, a method can be adopted in which an antioxidant is added to the polypropylene-based resin (R), with an oxidation induction temperature lower than 220°C, so that the oxidation induction temperature becomes 220°C or higher. In this specification, this step may be referred to as the antioxidant addition step. By performing the antioxidant addition step, it becomes easier to produce foamed particles having an oxidation induction time within the specified range, thereby making it easier to suppress degradation of the molded article over time.

In the antioxidant addition step, various aspects can be adopted in the method for adding an antioxidant to the polypropylene-based resin (R). For example, in the antioxidant addition step, the polypropylene-based resin (R) and the antioxidant may be fed into an extruder, then the antioxidant may be added to the polypropylene-based resin (R) by melt-kneading them together in the extruder. Moreover, the form of the antioxidant supplied to the extruder is not particularly limited. For example, in the antioxidant addition step, the antioxidant itself may be directly supplied to the extruder or a masterbatch containing the antioxidant may be supplied to the extruder. The base resin of the masterbatch may be, for example, a thermoplastic resin such as a polypropylene-based resin.

[Polypropylene-based resin (A)]

The foamed particles may contain, in addition to the recycled polypropylene-based resin (R), a polypropylene-based resin (A) composed of virgin polypropylene-based resin. In the present specification, the term "virgin polypropylene-based resin" refers to a polypropylene-based resin that has not been processed into products, etc. Note that a virgin polypropylene-based resin is also referred to as a non-recycled polypropylene-based resin.

When the foamed particles further contain a polypropylene-based resin (A) composed of virgin polypropylene-based resin, the blend ratio of the polypropylene-based resin (A) in the foamed particles is preferably 0.1 mass% or more and 50 mass% or less, while the blend ratio of the polypropylene-based resin (R) is 50 mass% or more and 99.9 mass% or less (provided that the total of the blend ratios of the polypropylene-based resins (R) and (A) is 100 mass%). Since the foamed particles have an oxidation induction time within the specified range, even when the blend ratio of the polypropylene-based resin (R) is relatively high, the effect of suppressing deterioration of the physical properties of the molded article can be easily achieved.

From the perspective of further increasing the blend ratio of the polypropylene-based resin (R) while achieving the effect of suppressing deterioration in the physical properties of the molded article, the blend ratio of the polypropylene-based resin (A) in the foamed particles is more preferably 0.2 mass% or more and 40 mass% or less, while the blend ratio of the polypropylene-based resin (R) is 60 mass% or more and 99.8 mass% or less. From a similar perspective, the blend ratio of the polypropylene-based resin (A) in the foamed particles is still more preferably 0.3 mass% or more and 25 mass% or less, while the blend ratio of the polypropylene-based resin (R) is 75 mass% or more and 99.7 mass% or less. Moreover, the blend ratio of the polypropylene-based resin (A) in the foamed particles is particularly preferably 0.5 mass% or more and 20 mass% or less, while the blend ratio of the polypropylene-based resin (R) is 80 mass% or more and 99.5 mass% or less. Moreover, the blend ratio of the polypropylene-based resin (A) in the foamed particles is most preferably 0.8 mass% or more and 10 mass% or less, while the blend ratio of the polypropylene-based resin (R) is 90 mass% or more and 99.2 mass% or less.

The polypropylene-based resin (A) may be a homopolymer of propylene or a propylene-based copolymer. From the perspective of more easily avoiding a decrease in foamability and further enhancing moldability, the polypropylene-based resin (A) is preferably a random copolymer, and more preferably, one or more polypropylene-based resins selected from the group consisting of ethylene-propylene random copolymers, propylene-butene random copolymers, and ethylene-propylene-butene random copolymers.

From the perspective of more easily avoiding a decrease in foamability and further enhancing moldability, the melting point of the polypropylene-based resin (A) is preferably 130°C or higher and lower than 160°C, more preferably 135°C or higher and 155°C or lower, still more preferably 138°C or higher and 152°C or lower, and particularly preferably 140°C or higher and 150°C or lower. The melting point of the polypropylene-based resin (A) can be measured in the same manner as the melting point of the polypropylene-based resin (R).

From the perspective of more easily avoiding a decrease in foamability and further enhancing moldability, the melt mass-flow rate of the polypropylene-based resin (A), as measured under the conditions of a load of 2.16 kg and a temperature of 230°C in accordance with JIS K7210-1:2014, is preferably 1 g/10 min or more and 12 g/10 min or less, more preferably 2 g/10 min or more and 10 g/10 min or less, and still more preferably 3 g/10 min or more and 8 g/10 min or less.

[Other polymers]

The foamed particles are composed of a polypropylene-based resin. That is, the foamed particles contain 50 mass% or more of structural units derived from propylene. However, the foamed particles may optionally contain, in addition to the polypropylene-based resin (R) and the polypropylene-based resin (A), other polymers different from the polypropylene-based resin as necessary, as long as they do not impair the effect of suppressing deterioration in the physical properties of the molded article. Exemplary polymers other than the polypropylene-based resin that may be included in the foamed particles include thermoplastic resins such as polyethylene-based resins, polystyrene-based resins, polyamide-based resins, and polyester-based resins; and thermoplastic elastomers such as olefin-based thermoplastic elastomers and styrene-based thermoplastic elastomers. The foamed particles may contain one or two or more of the polymers other than the abovementioned polypropylene-based resin.

The content of polymers other than the polypropylene-based resin in the foamed particles is preferably 20 mass% or less, more preferably 10 mass% or less, still more preferably 5 mass% or less, even more preferably 3 mass% or less, particularly preferably 1 mass% or less, and most preferably 0 mass%.

[Additives]

The foamed particles may optionally contain additives such as cell modifiers, colorants, antioxidants, antistatic agents, surfactants, light stabilizers, ultraviolet absorbers, and flame retardants. The foamed particles may contain one or two or more of the abovementioned additives. Moreover, the additive may be contained in the polypropylene-based resin (R) or in the polypropylene-based resin (A). Furthermore, the additive may be contained in both the polypropylene-based resin (R) and the polypropylene-based resin (A).

As the antioxidant, for example, publicly known antioxidants used for polypropylene-based resins may be employed, such as phosphorus-based antioxidants, sulfur-based antioxidants, and phenol-based antioxidants. The foamed particles may contain one type of antioxidant or may contain two or more types of antioxidants.

The content of the phosphorus-based antioxidant in the foamed particles is preferably 0.001 mass% or more and 0.3 mass% or less, more preferably 0.005 mass% or more and 0.2 mass% or less, and still more preferably 0.01 mass% or more and 0.1 mass% or less. As mentioned above, during the recycling process of polypropylene-based resin, thermal history is imparted to the polypropylene-based resin, which may result in an increased melt mass flow rate of the recycled polypropylene-based resin. Moreover, during the process of producing foamed particles, the polypropylene-based resin is subjected to further thermal history, making it more prone to an increase in melt mass flow rate during the process of producing foamed particles.

In contrast, the phosphorus-based antioxidant is excellent in terms of its effect of suppressing any increase in the melt mass flow rate of the polypropylene-based resin. Therefore, by blending the phosphorus-based antioxidant so that the content of the phosphorus-based antioxidant in the foamed particles is within the above-specified range, an excessive increase in the melt mass flow rate of the polypropylene-based resin (R) can be more readily suppressed. As a result, even when the blend ratio of the polypropylene-based resin (R) in the foamed particles is increased, it is possible to more easily avoid a decrease in foamability and in-mold moldability.

The phosphorus-based antioxidant in the foamed particles may be added to the resin particles together with the polypropylene-based resin (R) in the step of producing the resin particles used in producing the foamed particles (this step may be referred to as the "pelletizing step"). From the perspective to achieve the aforementioned effects more reliably, the phosphorus-based antioxidant is preferably added to the polypropylene-based resin (R) in the aforementioned antioxidant addition step. In other words, the phosphorus-based antioxidant is preferably contained in at least the polypropylene-based resin (R). Moreover, the content of the phosphorus-based antioxidant in the polypropylene-based resin (R) is preferably 0.005 mass% or more and 0.8 mass% or less, more preferably 0.007 mass% or more and 0.5 mass% or less, and still more preferably 0.01 mass% or more and 0.3 mass% or less.

The content of the phenol-based antioxidant in the foamed particles is preferably 0.005 mass% or more and 0.5 mass% or less, more preferably 0.007 mass% or more and 0.4 mass% or less, and still more preferably 0.01 mass% or more and 0.3 mass% or less. In this case, the effect of suppressing deterioration in the physical properties of the molded article over time can be further enhanced.

The reasons why the aforementioned effects can be obtained by phenol-based antioxidants are thought to be, for example, as follows. It is considered that the phenol-based antioxidant acts efficiently even in a high-temperature range of 220°C or higher in the process of producing the foamed particles, captures degradation factors such as free radicals generated when the polypropylene-based resin (R) undergoes thermal history, and can suppress the oxidation reaction. Therefore, phenol-based antioxidants are considered to be highly effective in increasing the oxidation induction temperature of the polypropylene-based resin (R). Therefore, by adding a phenol-based antioxidant having such action into the foamed particles and setting its content within the above range, the oxidation induction time of the foamed particles can be further extended.

The phenol-based antioxidant in the foamed particles may be added to the resin particles together with a polypropylene-based resin (R), etc. in the step of producing the resin particles used for producing foamed particles. However, from the perspective to achieve the aforementioned effects more reliably, the phenol-based antioxidant is preferably added to a polypropylene-based resin (R) in the aforementioned antioxidant addition step. In other words, the phenol-based antioxidant is preferably contained in at least the polypropylene-based resin (R). Moreover, the content of the phenol-based antioxidant in the polypropylene-based resin (R) is preferably 0.005 mass% or more and 0.8 mass% or less, more preferably 0.007 mass% or more and 0.5 mass% or less, and still more preferably 0.01 mass% or more and 0.3 mass% or less.

Moreover, from the perspective of more readily obtaining both the effect of avoiding a decrease in foamability and in-mold moldability as well as the effect of suppressing deterioration in the physical properties of the molded article over time, the foamed particles preferably contain both a phosphorus-based antioxidant in an amount of 0.001 mass% or more and 0.3 mass% or less and a phenol-based antioxidant in an amount of 0.005 mass% or more and 0.5 mass% or less, and more preferably contains a phosphorus-based antioxidant in an amount of 0.005 mass% or more and 0.2 mass% or less and a phenol-based antioxidant in an amount of 0.007 mass% or more and 0.4 mass% or less. From a similar perspective, the polypropylene-based resin (R) preferably contains both a phosphorus-based antioxidant in an amount of 0.005 mass% or more and 0.8 mass% or less and a phenol-based antioxidant in an amount of 0.005 mass% or more and 0.8 mass% or less, and more preferably contains both a phosphorus-based antioxidant in an amount of 0.007 mass% or more and 0.5 mass% or less and a phenol-based antioxidant in an amount of 0.007 mass% or more and 0.5 mass% or less. The combined use of a phenol-based antioxidant and a phosphorus-based antioxidant is considered to act synergistically and further enhance the effect of the phenol-based antioxidant. Therefore, in this case, the required amount of phenol-based antioxidant to make the oxidation induction temperature of the polypropylene-based resin (R) 220°C or higher can be reduced.

The foamed particles may optionally contain a sulfur-based antioxidant in an amount of 0.005 mass% or more and 0.8 mass% or less. Moreover, the polypropylene-based resin (R) may optionally contain a sulfur-based antioxidant in an amount of 0.008 mass% or more and 0.5 mass% or less.

The foamed particles may optionally contain carbon black. For example, carbon black may be added to the resin particles together with the polypropylene-based resin (R), etc. in the step of producing the resin particles used in producing foamed particles. Carbon black may also be included in the polypropylene-based resin (R) or in the polypropylene-based resin (A). Furthermore, carbon black may be included in both the polypropylene-based resin (R) and the polypropylene-based resin (A).

The content of carbon black in the foamed particles may be 0.5 mass% or more and 5 mass% or less, 1 mass% or more and 4.5 mass% or less, 1.5 mass% or more and 4 mass% or less, or 2 mass% or more and 3.5 mass% or less. Carbon black is thought to have the effect of capturing radicals that are generated in resins and suppressing the degradation of resins caused by radicals. Therefore, by adjusting the content of carbon black in the foamed particles within the specified range, it is possible to more easily control the oxidation induction time of the foamed particles within the specified range. Moreover, the foamed particles having a carbon black content within the specified range exhibit a black color. Accordingly, using such foamed particles for in-mold molding can impart a sense of luxury to the molded article.

The content of carbon black in the foamed particles may be less than 0.5 mass% (including 0). Such foamed particles and molded articles thereof can easily avoid problems such as excessive absorption of infrared radiation caused by carbon black. Therefore, in such cases, the used foamed particles or molded articles thereof can be recycled or reused in a wider range of applications. Note that, as described above, since the foamed particles have an oxidation induction time within the specified range, it is possible to suppress deterioration in the physical properties of the molded article over a long period of time, even when carbon black is not included or the content thereof is relatively low.

The content of carbon black in the polypropylene-based resin (R) is preferably less than 0.5 mass% (including 0). Polypropylene-based resins (R) having a carbon black content within the specified range have a relatively bright color tone. Therefore, by using such a polypropylene-based resin (R) in the production of the foamed particles, the color tone of the foamed particles can be more easily adjusted to the desired tone. In other words, in this case, by blending an appropriate colorant into the foamed particles, a desired color other than black can be imparted to the foamed particles. From this perspective, the content of carbon black in the polypropylene-based resin (R) is more preferably 0.3 mass% or less (including 0), further preferably 0.1 mass% or less (including 0), particularly preferably 0.05 mass% or less (including 0), and most preferably 0. Moreover, in the present invention, since the oxidation induction time of the foamed particles is a predetermined value or more, even when a polypropylene-based resin (R) having a low carbon black content is used, the effect of maintaining the good physical properties of the molded article can be further enhanced.

[Structure of foamed particles]

The foamed particles may have a single-layer structure consisting of only the foamed layer. The foamed layer of the foamed particles contains at least a polypropylene-based resin (R). The foamed layer may contain, in addition to the polypropylene-based resin (R), a polypropylene-based resin (A). When the foamed particles have a single-layer structure consisting of only a foamed layer, the blend ratio of the polypropylene-based resin (R) in the foamed particles is equal to the blend ratio of the polypropylene-based resin (R) in the foamed layer. Similarly, when the foamed particles have a single-layer structure consisting of only a foamed layer, the blend ratio of the polypropylene-based resin (A) in the foamed particles is equal to the blend ratio of the polypropylene-based resin (A) in the foamed layer.

The foamed particles may also have a multilayer structure including a foamed layer and a covering layer composed of a thermoplastic resin that covers the foamed layer. The covering layer may cover the entire surface of the foamed layer or only a part thereof. The covering layer may be formed on the surface of the foamed particles, for example, to improve fusion bonding between the foamed particles during in-mold molding or to impart functionality to the surface of the foamed particles. When the covering layer is provided to improve fusion bonding among foamed particles during in-mold molding, the thermoplastic resin constituting the covering layer preferably has a melting point or softening point lower than that of the foamed layer.

The covering layer may be in a foamed state or a non-foamed state, but is preferably in a substantially non-foamed state. "Substantially non-foamed" means a state in which the covering layer has not foamed and contains no bubbles or a state in which bubbles disappeared after foaming, indicating that the covering layer contains virtually no bubble structure.

The thermoplastic resin constituting the covering layer may be a crystalline thermoplastic resin or an amorphous thermoplastic resin. Exemplary crystalline thermoplastic resins used for the covering layer include polyolefin-based resins. Moreover, exemplary amorphous thermoplastic resins used for the covering layer include for example, polystyrene-based resins, etc. From the perspective of adhesion to the foamed layer, the thermoplastic resin constituting the covering layer is preferably a polyolefin-based resin, more preferably a polyethylene-based resin and/or a polypropylene-based resin, and even more preferably a polypropylene-based resin.

Exemplary polypropylene-based resins used for the covering layer include ethylene-propylene copolymers, propylene-butene copolymers, ethylene-propylene-butene copolymers, and propylene homopolymers, etc. Among these, the covering layer is particularly preferably composed of an ethylene-propylene copolymer and/or an ethylene-propylene-butene copolymer. Moreover, the polypropylene-based resin used for the covering layer may be a recycled polypropylene-based resin or a virgin polypropylene-based resin. Moreover, the covering layer may contain either one of a recycled polypropylene-based resin (i.e., a polypropylene-based resin (R)) or a virgin polypropylene-based resin (i.e., a polypropylene-based resin (A)), or may contain both resins.

When the foamed particles have a multilayer structure comprising a foamed layer and a covering layer, the blend ratio of the polypropylene-based resin (R) in the foamed particles is equal to the sum of the blend amount of the polypropylene-based resin (R) in the foamed layer and that in the covering layer, relative to the total weight of the foamed particles. Similarly, when the foamed particles have a multilayer structure comprising a foamed layer and a covering layer, the blend ratio of the polypropylene-based resin (A) in the foamed particles is equal to the sum of the blend amount of the polypropylene-based resin (A) in the foamed layer and that in the covering layer, relative to the total weight of the foamed particles.

The thermoplastic resin constituting the covering layer may contain, within a range that does not impair the abovementioned functional effects, additives such as nucleating agents, flame retardants, flame retardant assistants, plasticizers, antistatic agents, antioxidants, ultraviolet absorbers, light stabilizers, conductive fillers, antibacterial agents, and colorants. The content of the additives in the covering layer is preferably 0.01 parts by mass or more and 10 parts by mass or less per 100 parts by mass of the thermoplastic resin.

The mass ratio (ratio of mass%) of the foamed layer to the covering layer is preferably from 99.5:0.5 to 85:15, more preferably from 99:1 to 90:10, and still more preferably from 98:2 to 92:8, from the perspective of improving moldability while maintaining the rigidity of the molded article.

[Bulk density]

The bulk density of the foamed particles is preferably 10 kg/m$^3$ or more and 200 kg/m$^3$ or less, more preferably 12 kg/m$^3$ or more and 100 kg/m$^3$ or less, still more preferably 15 kg/m$^3$ or more and 80 kg/m$^3$ or less, and particularly preferably 20 kg/m$^3$ or more and 50 kg/m$^3$ or less. In this case, it is possible to easily obtain a molded article that is lightweight and has excellent compressive strength.

The method for calculating the bulk density of the foamed particles is as follows. First, the foamed particles are left to stand for 24 hours or more under conditions of 50% relative humidity, 23°C temperature, and 1 atm pressure to condition their state. The conditioned foamed particles thus obtained are placed into a graduated cylinder, after which the bottom of the graduated cylinder is lightly tapped against the floor several times to stabilize the filling height. The bulk volume (unit: L) of the foamed particle group is read from the scale on the graduated cylinder. Then, the mass (unit: g) of the foamed particle group in the graduated cylinder is divided by the aforementioned bulk volume and converted to obtain the bulk density of the foamed particles (unit: kg/m$^3$).

[High-temperature peak]

The foamed particles preferably have a crystalline structure in which, in the DSC curve obtained when the foamed particles are heated from 23°C to 200°C at a heating rate of 10°C/min, both a resin-specific peak derived from the melting of crystals inherent to the resin constituting the foamed layer and a high-temperature peak having a peak temperature higher than that of the resin-specific peak appear. Foamed particles having such a crystalline structure exhibit excellent mechanical strength and moldability. Note that the resin-specific peak occurs due to the endothermic heat generated when the crystals inherently present in the resin constituting the foamed layer melt. In contrast, the high-temperature peak is presumably caused by the melting of secondary crystals formed in the resin constituting the foamed layer during the process of producing the foamed particles. That is, if a high-temperature peak appears in the DSC curve, it is presumed that secondary crystals are formed in the foamed layer.

Whether or not the foamed particles have the aforementioned crystalline structure can be determined based on the DSC curve obtained by performing differential scanning calorimetry (DSC) under the above-described conditions in accordance with JIS K7121:1987. Moreover, when performing DSC, 1 to 3 mg of foamed particles may be used as a sample.

Specifically, in the DSC curve obtained when the foamed particles are heated from 23°C to 200°C at a heating rate of 10°C/min (i.e., the first heating) as described above, both a high-temperature peak and a resin-specific peak of the resin constituting the foamed layer appear. In contrast, in the DSC curve obtained after the first heating, when cooling from 200°C to 23°C at a cooling rate of 10°C/min and then reheating from 23°C to 200°C at a heating rate of 10°C/min (i.e., the second heating), only the resin-specific peak of the resin constituting the foamed layer appears. Therefore, by comparing the DSC curve obtained in the first heating with that obtained in the second heating, the resin-specific peak and the high-temperature peak can be distinguished. While the peak temperature of the resin-specific peak may slightly differ between the first and second heating, such a difference is usually within 5°C.

From the perspective of improving the moldability of the foamed particles and enhancing the rigidity of the molded article, the melting enthalpy of the high-temperature peak of the foamed particles is preferably 8 J/g or more and 30 J/g or less, more preferably 10 J/g or more and 28 J/g or less, still more preferably 12 J/g or more and 25 J/g or less, and particularly preferably 15 J/g or more and 22 J/g or less.

The above-described melting enthalpy of the high-temperature peak is a value determined as follows. First, 1 to 3 mg of the foamed particles after conditioning is used as a sample, and obtained the DSC curve by performing differential scanning calorimetry under the condition which is heated from 23°C to 200°C at a heating rate of 10°C/min. An exemplary DSC curve is illustrated in Fig. 3. If the foamed particles have a high-temperature peak, the DSC curve shows a resin-specific peak $\Delta H1$ and a high-temperature peak $\Delta H2$, which has a peak temperature on the higher temperature side than the peak of the resin-specific peak $\Delta H1$, as illustrated in Fig. 3.

Next, on the DSC curve, a straight line L5 is drawn connecting point $\alpha$, corresponding to 80°C, and point $\beta$, corresponding to the end melting temperature T of the foamed particles. Note that the melting end temperature T is the high-temperature end point of the high-temperature peak $\Delta H2$, namely, the intersection of the high-temperature peak $\Delta H2$

and the baseline on the side higher in temperature than the high-temperature peak ΔH2 in the DSC curve.

After drawing the straight line L5, a vertical line L6 parallel to the vertical axis of the graph is drawn through the maximum point γ, which exists between the intrinsic resin peak ΔH1 and the high-temperature peak ΔH2. This line L6 serves to separate the resin-specific peak ΔH1 from the high-temperature peak ΔH2. The melting enthalpy of the high-temperature peak ΔH2 can be calculated based on the area enclosed by the portion of the DSC curve constituting the high-temperature peak ΔH2, line L5, and line L6.

(Method for producing polypropylene-based resin foamed particles)

The method for producing the foamed particles is not particularly limited and may take various forms. For example, the foamed particles can be produced using a method involving dispersing the polypropylene-based resin foamed particles containing a polypropylene-based resin (R) (hereinafter, also referred to as "resin particles") in a dispersion medium, impregnating the resin particles with a foaming agent, then releasing the resin particles containing the foaming agent together with the dispersion medium under low pressure. Note that this type of foaming method is sometimes referred to as a "direct foaming method." Moreover, the foamed particles may be produced, for example, by an extrusion foaming method in which a foaming agent is supplied to a molten resin composition containing the polypropylene-based resin (R), melt-kneaded, and extruded from an extruder while being foamed and cut, or by an impregnation foaming method in which the resin particles are impregnated with a foaming agent in a gas phase, then foamed by supplying a heating medium to heat them.

The resin particles used in the direct foaming method can be created by the pelletizing step described below. Specific examples of the pelletizing step include the following methods. In order to obtain foamed particles having a single-layer structure composed of a foamed layer, polypropylene-based resin (R) is first supplied into an extruder and melt-kneaded in the extruder to prepare a resin melt-kneaded material. At this time, if necessary, resins such as polypropylene-based resin (A) other than the polypropylene-based resin (R), nucleating agents, carbon black, or other additives may be supplied into the extruder. Thereafter, the resin melt-kneaded material is extruded through small holes in a die attached to the tip of the extruder to form a strand-shaped extrudate. After cooling the extrudate, it is cut into a desired length to obtain resin particles having a single-layer structure composed of a core layer containing the polypropylene-based resin (R).

In order to obtain foamed particles having a multilayer structure including a foamed layer and a covering layer, resin particles having a multilayer structure may be created using a co-extrusion apparatus comprising a core layer-forming extruder, an extruder for forming a covering layer, and a co-extrusion die connected to these two extruders. In this case, in the core layer-forming extruder, the polypropylene-based resin (R) and optionally added other resins and additives are melt-kneaded to prepare a resin melt-kneaded material for forming the core layer. Moreover, in the extruder for forming a covering layer, the thermoplastic resin constituting the covering layer and optionally added additives are melt-kneaded to prepare a resin melt-kneaded material for forming the covering layer.

These resin melt-kneaded materials are co-extruded and joined together in the die to form a multilayer composite comprising a non-foamed core layer and a non-foamed covering layer that cover the outer surface of the core layer. This composite is extruded through small holes of the die to form a strand-shaped extrudate. After cooling the extrudate, it is cut into a desired length to obtain resin particles having a multilayer structure. This method is referred to as the strand cutting method. Note that the method for producing the resin particles is not limited to the methods described above, with a hot-cut method or an underwater-cut method also capable of being employed.

The average mass per resin particle is preferably 0.1 mg or more and 20 mg or less, more preferably 0.2 mg or more and 10 mg or less, still more preferably 0.3 mg or more and 5 mg or less, and particularly preferably 0.4 mg or more and 2 mg or less. Note that the average mass per resin particle is calculated by dividing the total mass of 200 randomly selected resin particles by the number of particles.

When the resin particles have a core layer and a covering layer, the mass ratio of the core layer to the covering layer is preferably from 99.5:0.5 to 85:15, more preferably from 99:1 to 90:10, and still more preferably from 98:2 to 92:8.

After the resin particles are created as described above, the resin particles are dispersed in a dispersion medium. The operation of dispersing the resin particles in a dispersion medium may be carried out in a sealed container used for foaming the resin particles or in a container separate from the sealed container. From the perspective of simplifying the step of producing, it is preferable to perform both the operation of dispersing the resin particles and the operation of foaming the resin particles in the same sealed container.

As the dispersion medium, an aqueous dispersion medium having water as its main component is used. The aqueous dispersion medium may contain, in addition to water, hydrophilic organic solvents such as ethylene glycol, glycerin, methanol, or ethanol. The water content in the aqueous dispersion medium is preferably 60 mass% or more, more preferably 70 mass% or more, and still more preferably 80 mass% or more.

A dispersant is preferably added into the dispersion medium. By adding a dispersant into the dispersion medium, fusion between the resin particles during the operation of foaming resin particles can be easily prevented. The amount of dispersant added is preferably 0.001 parts by mass or more and 5 parts by mass or less per 100 parts by mass of resin particles. As the dispersant, while either organic or inorganic dispersants can be used, fine particulate inorganic materials are preferably used due to their ease of handling. More specifically, exemplary dispersants including clay minerals such as amsonite, kaolin, mica, and clay, as well as aluminum oxide, titanium oxide, basic magnesium carbonate, basic zinc carbonate, calcium carbonate, iron oxide, etc. may be used. These dispersants may be used alone or in combinations of two or more. Among these, clay minerals are preferably used as dispersants. The clay minerals may be natural or synthetic.

Note that when using a dispersant, an anionic surfactant such as sodium dodecylbenzenesulfonate, sodium alkylbenzenesulfonate, sodium lauryl sulfate, or sodium oleate is preferably used in combinations as a dispersing aid. The amount of dispersing aid added is preferably 0.001 parts by mass or more and 1 part by mass or less per 100 parts by mass of resin particles.

Once the resin particles are dispersed in a dispersion medium, a foaming agent is impregnated into the resin particles in a sealed container. The foaming agent impregnated into the resin particles is preferably a physical foaming agent. Exemplary physical foaming agents include inorganic physical foaming agents such as carbon dioxide, air, nitrogen, helium, and argon; aliphatic hydrocarbons such as propane, butane, and hexane; cyclic aliphatic hydrocarbons such as cyclopentane and cyclohexane; and organic physical foaming agents such as halogenated hydrocarbons including 1-chloro-3,3,3-trifluoropropene, 1-chloro-2,3,3,3-tetrafluoropropene, 1,3,3,3-tetrafluoropropene, chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. These physical foaming agents may be used alone or in combinations of two or more. Moreover, inorganic and organic physical foaming agents may be used in combination. From the perspectives of environmental burden and handling properties, inorganic physical foaming agents are preferably used, with carbon dioxide more preferably used.

The amount of the foaming agent added relative to 100 parts by mass of the resin particles is preferably 0.1 parts by mass or more and 30 parts by mass or less, more preferably 0.5 parts by mass or more and 20 parts by mass or less, and even more preferably 1 part by mass or more and 15 parts by mass or less.

The method for impregnating the foaming agent into the resin particles can be carried out by supplying the foaming agent into a sealed vessel and increasing the pressure therein to impregnate the resin particles in the dispersion medium with the foaming agent. At this time, the impregnation of the foaming agent into the resin particles can be further promoted by heating the resin particles together with the dispersion medium.

The pressure inside the sealed vessel during foaming is preferably 0.5 MPa (G) or more in terms of gauge pressure. In contrast, the pressure inside the sealed vessel is preferably 4.0 MPa (G) or less in terms of gauge pressure. Within the above range, foamed particles can be safely produced without risk of damage to or explosion of the sealed vessel, etc.

Moreover, when heating the dispersion medium, controlling the heating rate of the dispersion medium within a range of 1°C/min or more and 5°C/min or less allows the temperature during foaming to be kept within an appropriate range.

Once impregnation of the foaming agent into the resin particles is completed, the contents of the sealed vessel are released into an environment with a pressure lower than that inside the sealed vessel. As a result, the core layer of the resin particles foams to form a cellular structure and the external air cools the particles to stabilize the cellular structure, thereby yielding foamed particles.

When impregnating the core layer with the foaming agent, heating and foaming is preferably performed in the following manner. Specifically, a first holding step is first performed in which the resin particles are maintained for a sufficient period, preferably approximately 10 to 60 minutes, at a temperature of (melting point of the resin particles - 20°C) or higher and less than (the melting completion temperature of the resin particles). Thereafter, the temperature is adjusted to a value from (melting point of the resin particles - 15°C) to less than (melting completion temperature of the resin particles + 10°C). Then, if necessary, a second holding step is performed in which the particles are maintained at that temperature for a sufficient time, preferably approximately 10 to 60 minutes. Thereafter, the contents of the sealed vessel are preferably released to the outside while the temperature inside the vessel is maintained at (melting point of the resin particles - 10°C) or more, thereby foaming the resin particles. The temperature inside the sealed vessel during foaming is more preferably (the melting point of the resin particles) or more and (melting point of the resin particles + 20°C) or less. By heating and foaming the resin particles in this manner, secondary crystals can be formed in the resin forming the foamed layer, thereby easily obtaining foamed particles with excellent mechanical strength and moldability.

Note that the melting point of the resin particles can be determined based on the DSC curve obtained by performing differential scanning calorimetry (DSC) in accordance with JIS K7121-1987. First, the condition of the resin particles is adjusted according to "(2) When measuring the melting temperature after a certain heat treatment." The heating and cooling rates for conditioning are set at 10°C/min. The DSC curve is obtained by heating the conditioned resin particles from 30°C to 200°C at a rate of 10°C/min, with the apex temperature of the melting peak appearing on the DSC curve defined as the melting point of the resin particles. Note that if multiple melting peaks appear on the DSC curve, the apex temperature of the melting peak with the largest area is taken as the melting point of the resin particles.

In order to produce a molded article, the foamed particles thus obtained may be used as is. Moreover, the foamed particles obtained using the above-described direct foaming method may be further foamed to reduce the bulk density, with such foamed particles capable of being used to produce the molded article. Note that when the foaming of resin particles is performed in two stages in this manner, the first-stage foaming step is referred to as the "primary foaming step," while the foamed particles obtained by the primary foaming step are referred to as "primary foamed particles." Moreover, the second-stage foaming step is referred to as the "secondary foaming step." The foamed particles obtained through the secondary foaming step may be referred to as "secondary foamed particles."

A method for reducing the bulk density of the foamed particles by secondary foaming is, for example, as follows: First, in the primary foaming step, the resin particles are foamed by the aforementioned direct foaming method to obtain primary foamed particles. Thereafter, an internal pressure is applied to the primary foamed particles. More specifically, after placing the primary foamed particles in a pressure-resistant vessel, the interior of the vessel is pressurized with an inorganic gas such as air or carbon dioxide, thereby impregnating the foamed particles with the inorganic gas. As a result, the internal pressure of the cells in the primary foamed particles becomes atmospheric pressure or higher. Subsequently, the primary foamed particles taken out from the pressure-resistant vessel are further foamed by heating them in an environment with a pressure lower than the internal pressure of the cells using a heating medium such as steam or heated air. In this way, secondary foamed particles can be obtained.

(Polypropylene-based resin foamed particle molded articles)

A polypropylene-based resin foamed particle molded article can be obtained by charging the above-described foamed particles into a mold, then performing in-mold molding by supplying a heating medium such as steam into the mold. The density of the molded article is preferably 10 kg/m$^3$ or more and 200 kg/m$^3$ or less, more preferably 20 kg/m$^3$ or more and 150 kg/m$^3$ or less, and still more preferably 30 kg/m$^3$ or more and 100 kg/m$^3$ or less. In this case, both the lightweight properties and rigidity of the molded article can be improved in a well-balanced manner. The density of the molded article is calculated by dividing the mass (unit: g) of the molded article by the volume (unit: L) obtained from the external dimensions of the molded article and converting the units accordingly. Note that, for example, if the molded article has a complex shape at least in part and it is difficult to determine its volume based on its external dimensions, the volume can be determined using the water displacement method.

The polypropylene-based resin foamed particle molded article is obtained by in-mold molding the foamed particles. Accordingly, despite containing a large amount of recycled polypropylene-based resin, the molded article can suppress deterioration in the physical properties over a long period of time. More specifically, for example, even under high-temperature conditions such as 80°C, the molded article is prevented from degrading, allowing it to be used for an extended period even in severer usage environments.

[Examples]

Examples of the foamed particles described above will be described.

(Polypropylene-based resin (R))

Tables 1 and 2 show the properties and other characteristics of the polypropylene-based resin (R) used in the production of foamed particles. The polypropylene-based resin (R) used in this example is derived from polypropylene-based resin recycled from foamed molded articles of the same resin. More specifically, PP-R1, PP-R2, and PP-R4 shown in Table 1 and PP-R5, PP-R6, and PP-R9 shown in Table 2 were obtained by feeding the recycled polypropylene-based resin of the lots shown in Tables 1 and 2 and the antioxidant masterbatch at the ratios shown in Tables 1 and 2 into an extruder, melt-kneading the mixture, and pelletizing the extruded material.

Note that the recycled polypropylene-based resin used in this example is more specifically derived from a foamed particle molded article composed of a polypropylene-based random copolymer and is obtained by crushing the molded article after compression. Moreover, in the "Lot symbol" column of Tables 1 and 2, the lot symbol represents a lot defined as recycled polypropylene-based resin obtained from the same polypropylene-based foamed molded article. Therefore, recycled polypropylene-based resins obtained from different foamed molded articles are assigned different lot symbols.

The antioxidant masterbatch used in this example is composed of a virgin polypropylene-based resin containing a phenol-based antioxidant, a sulfur-based antioxidant, and a phosphorus-based antioxidant. Specifically, "Irganox 1010" (phenol-based antioxidant) available from BASF, "DSTDP" (sulfur-based antioxidant) available from Naugard, and "Irgafos 168" (phosphorus-based antioxidant) available from BASF were used.

The concentrations of the antioxidants in the masterbatch used in PP-R1, PP-R2, and PP-R4 to PP-R6 are 2 mass% for the phenol-based antioxidant, 4 mass% for the sulfur-based antioxidant, and 0.6 mass% for the phosphorus-based antioxidant. Accordingly, the amounts of each antioxidant added to PP-R1, PP-R2, and PP-R4 to PP-R6 are as shown in Tables 1 and 2.

The concentrations of the antioxidants in the masterbatch used in PP-R9 are 16 mass% for the phenol-based antioxidant, 4 mass% for the sulfur-based antioxidant, and 0.6 mass% for the phosphorus-based antioxidant. Accordingly, the amounts of each antioxidant added to PP-R9 are as shown in Table 2.

PP-R3 shown in Table 1 and PP-R7 shown in Table 2 are obtained by melt-kneading recycled polypropylene-based resins, which have been recycled from polypropylene-based resin foamed molded articles, in an extruder, then extruding and pelletizing them from the extruder. PP-R8 shown in Table 2 is obtained by feeding the recycled polypropylene-based resin material obtained from a polypropylene-based resin foamed molded article and carbon black, at the ratio indicated in Table 2, into an extruder, melt-kneading them, then extruding and pelletizing the mixture. Note that in Tables 1 and 2, the recycled polypropylene-based resin obtained from the polypropylene-based resin foamed molded article is referred to as "rEPP."

[Oxidation induction temperature of polypropylene-based resin (R)]

The oxidation induction temperature of the polypropylene-based resin (R) was measured by performing differential scanning calorimetry (DSC) in accordance with ISO 11357-6:2018, using approximately 5 mg of the polypropylene-based resin (R) as a sample. More specifically, the sample was first placed in an open sample pan, then disposed on the sample stage of the DSC apparatus. Next, air was supplied into the furnace of the DSC apparatus to replace the atmosphere inside the furnace with air. Note that the measurements were made using a heat flux type differential scanning calorimeter (model name: DSC Q1000 available from TA Instruments). Moreover, the flow rate of the air was set to 50 mL/min.

Once the atmosphere in the furnace was filled with air, the sample was heated at a rate of 10°C/min and the heat flow of the sample was measured up to a temperature that is 30°C or higher than the peak of the exothermic reaction caused by oxidative degradation of the sample. Then, a graph referred to as the oxidation induction temperature curve (see Fig. 2) was created by plotting the thus-obtained heat flow on the vertical axis and the heating temperature on the horizontal axis.

In order to determine the oxidation induction temperature of the polypropylene-based resin (R), the temperature T4 at which the slope of the tangent to the oxidation induction temperature curve became steepest was identified within the range from the temperature T2, where oxidative decomposition of the sample began, to the temperature T5, which corresponds to the peak of the exothermic reaction. Then, an extended baseline L3 of the oxidation induction temperature curve from the temperature T2 and a tangent line L4 at the temperature T4 were drawn on the oxidation induction temperature curve. The temperature T3, corresponding to the intersection of the extended line L3 and the tangent line L4 in this manner, was defined as the oxidation induction temperature of the polypropylene-based resin (R).

[Melting point of polypropylene-based resin (R)]

The melting point of the polypropylene-based resin (R) was measured based on a DSC curve obtained by performing differential scanning calorimetry (DSC) in accordance with JIS K7121-1987, using the polypropylene-based resin (R) as the sample. Specifically, sample conditioning was first carried out according to the procedure "(2) When measuring melting temperature after a certain heat treatment." The heating and cooling rates for conditioning were set at 10°C/min. The DSC curve was obtained by heating the conditioned sample from 30°C to 200°C at a rate of 10°C/min, with the apex temperature of the melting peak appearing on the DSC curve defined as the melting point of the polypropylene-based resin (R). Note that when multiple melting peaks appeared on the DSC curve, the apex temperature of the melting peak with the largest area was defined as the melting point of the polypropylene-based resin (R).

[Melt mass-flow rate of polypropylene-based resin (R)]

The melt mass flow rate of the polypropylene-based resin (R) was measured under the conditions of a test temperature of 230°C and a load of 2.16 kg, in accordance with JIS K7210-1:2014.

(Polypropylene-based resin (A))

Table 3 shows the properties and other characteristics of the polypropylene-based resin (A) used in the production of foamed particles. The polypropylene-based resin (A) used in this example was a virgin polypropylene-based resin composed of an ethylene-propylene random copolymer and contains a phenol-based antioxidant in the amount shown in Table 3.

[Oxidation induction temperature of polypropylene-based resin (A)]

The method for measuring the oxidation induction temperature of the polypropylene-based resin (A) was the same as that for the polypropylene-based resin (R), except that a polypropylene-based resin (A) was used instead of a polypropylene-based resin (R).

[Melting point of polypropylene-based resin (A)]

The method for measuring the melting point of the polypropylene-based resin (A) was the same as that for the polypropylene-based resin (R), except that a polypropylene-based resin (A) was used instead of a polypropylene-based resin (R).

[Melt mass-flow rate of polypropylene-based resin (A)]

The method for measuring the melt mass flow rate of the polypropylene-based resin (A) was the same as that for the polypropylene-based resin (R), except that a polypropylene-based resin (A) is used instead of a polypropylene-based resin (R).
Next, the structure and production method of the foamed particles in this example will be described below.

(Example 1)

The foamed particles of Example 1 include a foamed layer containing a polypropylene-based resin (R) and a covering layer composed of a virgin polypropylene-based resin, which covers the foamed layer. In order to produce the foamed particles in this example, first, a co-extrusion apparatus equipped with a core layer-forming extruder, a covering layer-forming extruder, and a co-extrusion die connected to both extruders was used. A composite extruded from the co-extrusion apparatus was cut using a strand-cutting method to create multilayer resin particles having a covering layer.
Specifically, PP-R1, PP-A1, a cell control agent, and carbon black were supplied to the core layer-forming extruder and melt-kneaded in the extruder to prepare a resin melt-kneaded material for forming the core layer. The blend ratio of PP-R1 and PP-A1 in the resin melt-kneaded material for forming the core layer was as shown in Table 1. Zinc borate was used as the cell control agent. The amount of zinc borate added was 0.05 parts by mass per 100 parts by mass of the total of PP-R1 and PP-A1. The amount of carbon black added was adjusted so that the content of carbon black in the resin melt-kneaded material for forming the core layer was 2.8 mass%. Note that in Tables 4 and 5, the polypropylene-based resin (R) is abbreviated as PP(R), while the polypropylene-based resin (A) is abbreviated as PP(A).
Moreover, a virgin polypropylene-based resin (specifically, a propylene-ethylene random copolymer with a melting point of 133°C and a melt mass-flow rate of 6 g/10 min) and carbon black were supplied to the covering layer-forming extruder to prepare a resin melt-kneaded material for forming the covering layer in the extruder. Note that the amount of carbon black added was adjusted so that the content of carbon black in the resin melt-kneaded material for forming the covering layer was 2.8 mass%.
These resin melt-kneaded materials were made to join together in the die to form a composite composed of a non-foamed cylindrical core layer and a non-foamed covering layer covering the side surface of the core layer, after which they were co-extruded in the form of strands from the die. The strand-shaped composite was taken, cooled, then cut into a suitable length using a pelletizer to obtain cylindrical resin particles (i.e., multilayer resin particles) having a core layer and a covering layer covering the outer surface of the core layer. The mass ratio of the covering layer in the multilayer resin particles was 3 mass%.
Next, the multilayer resin particles were foamed by a direct foaming method. Specifically, 100 kg of the multilayer resin particles were first placed into a container with an internal volume of 400 L along with 220 L of water as an aqueous dispersion medium. Thereafter, 0.3 parts by mass of a dispersant, 0.004 parts by mass of sodium alkylbenzenesulfonate as a dispersion aid, and 0.01 parts by mass of aluminum sulfate were added per 100 parts by mass of the multilayer resin particles to disperse the particles in the aqueous dispersion medium. Kaolin was used as the dispersant.
Subsequently, while stirring the contents, carbon dioxide was supplied as a foaming agent into the sealed container and the temperature inside the container was raised to 145°C. The pressure inside the container at that time was 3.4 MPa (G). Thereafter, by maintaining this temperature for 15 minutes, the foaming agent was impregnated into the multilayer resin particles and the crystalline state was adjusted so that the abovementioned high-temperature peak appeared on the DSC curve of the resulting foamed particles. Then, the container was opened and the contents were released into an atmospheric pressure environment, thereby foaming the multilayer resin particles. The thus-obtained foamed particles were dried at 23°C and 50% relative humidity for 24 hours. As a result, foamed particles were obtained that included a foamed layer formed by foaming the core layer and a non-foamed covering layer covering the foamed layer.

(Examples 2 and 3)

The foamed particles in these examples have substantially the same structure as those of Example 1, except that the polypropylene-based resin (R) shown in Table 4 was used instead of PP-R1. The methods for producing the foamed particles in these examples were also substantially the same as that of Example 1, except that the polypropylene-based resin (R) shown in Table 4 was used instead of PP-R1.

(Example 4)

The foamed particles of Example 4 have substantially the same structure as those of Example 1, except that the blend ratio of PP-R1 and PP-A1 was changed as shown in Table 4 and neither the foamed layer nor the covering layer contains carbon black. The method for producing the foamed particles in Example 4 is also substantially the same as that of Example 1, except that the blend ratio of PP-R1 and PP-A1 was changed as shown in Table 4 and carbon black was not added to either the resin melt-kneaded material for forming the core layer or that for forming the covering layer.

(Examples 5 to 9)

The foamed particles in these examples have substantially the same structure as those of Example 4, except that the polypropylene-based resin (R) shown in Table 4 was used instead of PP-R1. The methods for producing the foamed particles in these examples were also substantially the same as that of Example 4, except that the polypropylene-based resin (R) shown in Table 4 was used instead of PP-R1.

(Comparative Example 1)

The foamed particles of Comparative Example 1 have substantially the same structure as those of Example 1, except that PP-R7 was used instead of PP-R1. The method for producing the foamed particles of Comparative Example 1 is also substantially the same as that of Example 1, except that PP-R7 was used instead of PP-R1.

(Comparative Example 2)

The foamed particles of Comparative Example 2 have substantially the same structure as those of Example 1, except that PP-R8 was used instead of PP-R1, PP-A2 was used instead of PP-A1, and the blend amount of carbon black was changed as shown in Table 5. The method for producing the foamed particles of Comparative Example 2 is also substantially the same as that of Example 1, except that PP-R8 was used instead of PP-R1, PP-A2 was used instead of PP-A1, and the blend amount of carbon black was changed as shown in Table 5.

(Comparative Example 3)

The foamed particles of Comparative Example 3 have substantially the same structure as those of Example 4, except that PP-R7 was used instead of PP-R1. The method for producing the foamed particles of Comparative Example 3 is also substantially the same as that of Example 4, except that PP-R7 was used instead of PP-R1.

(Comparative Example 4)

The foamed particles of Comparative Example 4 have substantially the same structure as those of Example 4, except that PP-R9 was used instead of PP-R1. The method for producing the foamed particles of Comparative Example 4 is also substantially the same as that of Example 4, except that PP-R9 was used instead of PP-R1.

Tables 4 to 5 show various properties of the resin particles, foamed particles, and molded articles obtained by in-mold molding the foamed particles, in Examples 1 to 9 and Comparative Examples 1 to 4.

(Resin particles)

[Added amount of the antioxidant]

The amount of antioxidant contained in the resin particles that was added in the form of a masterbatch during the production of the polypropylene-based resin (R) was calculated based on the blend amount of the masterbatch antioxidant blended during the pelletization of the polypropylene-based resin (R) used to produce the resin particles, the blend amount of the polypropylene-based resin (R) in the resin particles, and the mass ratio of the core layer.

[Melting point and melt mass-flow rate of the resin particles]

The method for measuring the melting point and melt mass-flow rate of the resin particles was the same as the abovementioned method for measuring the melting point and melt mass-flow rate of the polypropylene-based resin (R), except that the resin particles were used as the sample instead of the polypropylene-based resin (R).

(Foamed particles)

[Melting enthalpy at the high-temperature peak]

The melting enthalpy at the high-temperature peak was calculated based on the DSC curve obtained by performing differential scanning calorimetry (DSC) under the conditions described above, in accordance with JIS K7121:1987. Specifically, first, 1 to 3 mg of the foamed particles after conditioning were used as a sample, and obtained the DSC curve by performing differential scanning calorimetry under the condition which was heated from 23°C to 200°C at a heating rate of 10°C/min.
Next, on the DSC curve illustrated in Fig. 3, a straight line L5 was drawn connecting point $\alpha$, corresponding to 80°C, and point $\beta$, corresponding to the end melting temperature T of the foamed particles. After drawing the straight line L5, a vertical line L6 parallel to the vertical axis of the graph was drawn through the maximum point $\gamma$, which exists between the intrinsic resin peak $\Delta H1$ and the high-temperature peak $\Delta H2$. The melting enthalpy of the high-temperature peak $\Delta H2$ was calculated based on the area enclosed by the portion corresponding to $\Delta H2$ on the DSC curve, the straight line L5, and the straight line L6.

[Oxidation induction temperature]

The method for measuring the oxidation induction temperature of the foamed particles was the same as the abovementioned method for measuring the oxidation induction temperature of the polypropylene-based resin (R), except that the foamed particles were used as the sample instead of the polypropylene-based resin (R) and the amount of the foamed particles placed in the sample pan was adjusted so that all the foamed particles were in contact with the bottom surface of the sample pan. Note that when all the foamed particles were placed in contact with the bottom surface of the sample pan, the mass of the foamed particles in the pan ranged from approximately 3 to 6 mg.

[Oxidation induction time]

Approximately 3 to 6 mg of the foamed particles were used as a sample and differential scanning calorimetry (DSC) was performed in accordance with ISO 11357-6:2018 to measure the oxidation induction time of the foamed particles. More specifically, the sample was first placed in an open sample pan without a lid and disposed on the sample stage of the DSC apparatus. The sample was placed so that all foamed particles contacted the bottom of the pan and did not overlap one another. In other words, the sample pan was filled with the foamed particles such that only one layer of the foamed particles was present in the sample pan. Next, nitrogen gas with a purity of 99.99% or more was supplied into the furnace of the DSC apparatus to replace the atmosphere inside the furnace with nitrogen. Note that the flow rate of the nitrogen gas was set to 50 mL/min. Note that the measurement was conducted using a heat flux type differential scanning calorimeter (model name: DSC Q1000 available from TA Instruments).
Once the furnace atmosphere was fully replaced with nitrogen gas, the sample was heated to 200°C at a rate of 10°C/min while continuing to supply nitrogen gas. Then, after maintaining the temperature at 200°C for 3 minutes, the supply of nitrogen gas was stopped and air was introduced into the furnace. Note that the air flow rate was set to 50 mL/min. Subsequently, the temperature was maintained at 200°C and air was continuously supplied. Subsequently, the heat flow of the sample was monitored until the exothermic peak due to oxidative degradation was observed. Then, a graph referred to as an oxidation induction time curve (see Fig. 1) was created by plotting the thus-obtained heat flow on the vertical axis and the elapsed time from the start of the test on the horizontal axis.
In order to determine the oxidation induction time of the foamed particles, first, the time t4 at which the slope of the tangent to the oxidation induction time curve was greatest between the time t2, when oxidative degradation of the sample began, and the time t5, corresponding to the apex of the exothermic peak was first identified. A baseline extension line L1 was then drawn from the time t2 on the oxidation induction time curve, while a tangent line L2 was drawn at the time t4 on the oxidation induction time curve. Then, the oxidation induction time t of the foamed particles was defined as the time from t1 to t3, with t3 corresponding to the intersection of the extension line L1 and the tangent line L2.

[Bulk density]

The foamed particles were left to stand for 24 hours or more under conditions of 50% relative humidity, 23°C temperature, and 1 atm pressure to condition their state. The conditioned foamed particles thus obtained, with a bulk volume of approximately 500 cm$^3$, were placed into a graduated cylinder, after which the bottom of the graduated cylinder was lightly tapped against the floor several times to stabilize the filling height. Thereafter, the exact bulk volume (unit: L) of the foamed particle group was then read from the scale of the graduated cylinder. Then, the bulk density (unit: kg/m$^3$) of the foamed particles was calculated by dividing the mass (unit: g) of the foamed particles in the graduated cylinder by the abovementioned bulk volume and converting the units accordingly.

(Molded article)

Using the foamed particles of the examples and comparative examples, a flat plate-shaped molded article with dimensions of 400 mm in length, 300 mm in width, and 80 mm in thickness was produced by in-mold molding. Specifically, the foamed particles were packed into a mold by a compression filling method so that the filling ratio P shown in Tables 4 and 5 was achieved. Note that the compression filling method is a filling method in which the foamed particles are filled into the mold under pressure. Moreover, the filling ratio P is expressed by the following equation (1):

$$P = [a / (b \times c)] \times 100 \quad ...(1)$$

However, in the equation (1), "a" represents the mass (unit: kg) of the foamed particles filled in the mold, "b" represents the bulk density (unit: kg/m$^3$) of the foamed particles, and "c" represents the internal volume (unit: m$^3$) of the mold.

Next, steam was supplied into the mold to perform in-mold molding. For in-mold molding, preliminary heating was first performed by supplying steam into the mold for 5 seconds with the mold's drain valve open. Then, the drain valve was closed and steam was supplied from one side of the mold until the pressure reached 0.08 MPa (G) lower than the molding pressure during the main heating, thereby performing a first one-side heating. Next, steam was supplied from the other side of the mold until the pressure reached 0.04 MPa (G) lower than the molding pressure during the main heating, thereby performing a second one-side heating. Thereafter, steam was supplied from both sides of the mold until the molding pressure shown in Tables 4 and 5 (i.e., the molding pressure during the main heating) was reached, thereby performing main heating. After completing the main heating, the pressure in the mold was released and the molded article was cooled in the mold until the surface pressure caused by the foaming force of the molded article reached 0.04 MPa (G). Thereafter, the mold was opened and the foamed particle molded article was removed. The obtained foamed particle molded article was cured in an oven at 80°C for 12 hours, then gradually cooled to room temperature to obtain the foamed particle molded article.

[Density of the molded article]

The density (unit: kg/m$^3$) of the molded article obtained by the above method was calculated by dividing the mass (unit: g) of the molded article by the volume (unit: L) derived from its external dimensions and converting the units accordingly.

[Tensile strength]

The tensile strength of the molded article was measured in accordance with ISO 1798:2008.
Specifically, a 13 mm-thick flat plate was cut out from the central part of the molded article, ensuring that the skin surface, i.e., the surface that had been in contact with the inner wall of the mold during in-mold molding, was excluded. From this flat plate, a No.1 dumbbell-shaped test specimen was cut using a coping saw. After conditioning the test specimen by leaving it under standard conditions for 24 hours, a tensile test was conducted at a tensile speed of 500 mm/min. Then, the maximum load measured during the test was taken as the tensile strength of the test specimen. Note that a universal testing machine (Instron 6800 available from Instron Corporation) was used for the tensile test.
The above test was conducted using five test specimens, with the average tensile strength from the five measurements taken as the tensile strength of the molded article and shown in Tables 4 and 5.

[Resilience]

In the top view of the foamed particle molded article viewed from the thickness direction, the thicknesses of the foamed particle molded article at four positions located 10 mm inward from each corner toward the center, as well as at the central position, were measured, respectively. Then, the ratio (unit: %) of the thinnest thickness to the thickest thickness among the measured positions was calculated. If the thus-obtained thickness ratio was 95% or higher, the result was deemed acceptable and indicated with the symbol "A" in the "Resilience" column of Tables 4 and 5, while if the ratio was less than 95%, it was deemed unacceptable and marked with the symbol "C" in this column.

[Heat aging resistance]

Three test specimens having a cubic shape (with a side length of 50 mm each) were cut from around the center portion of the foamed particle molded article so as not to include the skin surface. These three test specimens were placed in an oven set to a predetermined ambient temperature, then removed from the oven after a predetermined test time had elapsed. Note that the ambient temperature and the test time in the oven were selected according to one of the following Conditions 1 or 2, depending on the carbon black content in the foamed particles used to mold the molded article.

Condition 1: Applied when the carbon black content in the foamed particles was 0.5 mass% or more
Ambient temperature in the oven: 80°C
Test time: 180 days
Condition 2: Applied when the carbon black content in the foamed particles was less than 0.5 mass%
Ambient temperature in the oven: 130°C
Test duration: 60 days

Then, heat aging resistance was evaluated based on visual observations of the test specimens taken out from the oven. The meanings of the symbols shown in the "Heat aging resistance" columns in Tables 4 and 5 are as follows:

A: None of the three test specimens exhibited any powdering or color change
B: At least one of the three test specimens exhibited powdering or color change
C: At least one of the three test specimens was significantly degraded and exhibited surface cracking

[Table 1]

(Table 1)

| | | | Unit | PP-R1 | PP-R2 | PP-R3 | PP-R4 |
|---|---|---|---|---|---|---|---|
| Blend ratio | Recycled polypropylene-based resin | Type | – | rEPP | rEPP | rEPP | rEPP |
| | | Lot symbol | – | A | B | C | D |
| | | Blend amount | Parts by mass | 96 | 96 | 100 | 96 |
| | Antioxidant masterbatch | Blend amount | Parts by mass | 4 | 4 | 0 | 4 |
| | Carbon black | Blend amount | Parts by mass | 0 | 0 | 0 | 0 |
| Added amount of the phenol-based antioxidant | | | Mass ppm | 800 | 800 | 0 | 800 |
| Added amount of the sulfur-based antioxidant | | | Mass ppm | 1600 | 1600 | 0 | 1600 |
| Added amount of the phosphorus-based antioxidant | | | Mass ppm | 240 | 240 | 0 | 240 |
| Oxidation induction temperature | | | °C | 237 | 226 | 220 | 230 |
| Melting point | | | °C | 141 | 147 | 142 | 147 |
| Melt mass-flow rate | | | g/10 min | 9 | 12 | 12 | 10 |

[Table 2]

(Table 2)

| | | | Unit | PP–R5 | PP–R6 | PP–R7 | PP–R8 | PP–R9 |
|---|---|---|---|---|---|---|---|---|
| Blend ratio | Recycled polypropylene-based resin | Type | – | rEPP | rEPP | rEPP | rEPP | rEPP |
| | | Lot symbol | – | E | F | G | H | I |
| | | Blend amount | Parts by mass | 96 | 96 | 100 | 97.2 | 96 |
| | Antioxidant masterbatch | Blend amount | Parts by mass | 4 | 4 | 0 | 0 | 4 |
| | Carbon black | Blend amount | Parts by mass | 0 | 0 | 0 | 2.8 | 0 |
| Added amount of the phenol-based antioxidant | | | Mass ppm | 800 | 800 | 0 | 0 | 6400 |
| Added amount of the sulfur-based antioxidant | | | Mass ppm | 1600 | 1600 | 0 | 0 | 1600 |
| Added amount of the phosphorus-based antioxidant | | | Mass ppm | 240 | 240 | 0 | 0 | 240 |
| Oxidation induction temperature | | | °C | 227 | 225 | 210 | 210 | 294 |
| Melting point | | | °C | 144 | 142 | 142 | 147 | 147 |
| Melt mass-flow rate | | | g/10 min | 10 | 12 | 19 | 10 | 12 |

[Table 3]

(Table 3)

| | Unit | PP–A1 | PP–A2 |
|---|---|---|---|
| Melting point | °C | 144 | 142 |
| Content of the phenol-based antioxidant | Mass ppm | 2000 | 250 |
| Oxidation induction temperature | °C | 247 | 211 |
| Melt mass-flow rate | g/10 min | 5 | 8 |

[Table 4]

(Table 4)

| | | | Unit | Example 1 | Example 2 | Example 3 | Example 4 | Example 5 | Example 6 | Example 7 | Example 8 | Example 9 |
|---|---|---|---|---|---|---|---|---|---|---|---|---|
| Foamed layer | PP(R) | Resin type | – | PP–R1 | PP–R2 | PP–R3 | PP–R1 | PP–R4 | PP–R2 | PP–R5 | PP–R6 | PP–R3 |
| | | Blend amount | Parts by mass | 96 | 96 | 96 | 99 | 99 | 99 | 99 | 99 | 99 |
| | PP(A) | Resin type | – | PP–A1 | PP–A1 | PP–A1 | PP–A1 | PP–A1 | PP–A1 | PP–A1 | PP–A1 | PP–A1 |
| | | Blend amount | Parts by mass | 4 | 4 | 4 | 1 | 1 | 1 | 1 | 1 | 1 |
| Covering layer | Ratio in foamed particles | | Mass% | 3 | 3 | 3 | 3 | 3 | 3 | 3 | 3 | 3 |
| Resin particles | Added amount of the phenol-based antioxidant | | Mass ppm | 745 | 745 | 0 | 769 | 769 | 769 | 769 | 769 | 0 |
| | Added amount of the sulfur-based antioxidant | | Mass ppm | 1490 | 1490 | 0 | 1537 | 1537 | 1537 | 1537 | 1537 | 0 |
| | Added amount of the phosphorus-based antioxidant | | Mass ppm | 223 | 223 | 0 | 231 | 231 | 231 | 231 | 231 | 0 |
| | Melting point | | °C | 141 | 143 | 138 | 141 | 144 | 142 | 140 | 138 | 138 |
| | Melt mass-flow rate | | g/10 min | 10 | 11 | 11 | 11 | 10 | 20 | 12 | 12 | 14 |
| | Content of carbon black | | Mass% | 2.8 | 2.8 | 2.8 | 0 | 0 | 0 | 0 | 0 | 0 |
| Foamed particles | Melting enthalpy at the high-temperature peak | | J/g | 20 | 17 | 19 | 19 | 19 | 19 | 18 | 19 | 17 |
| | Oxidation induction temperature | | °C | 229 | 230 | 226 | 226 | 230 | 226 | 224 | 225 | 218 |
| | Oxidation induction time | | min | 80 | 61 | 33 | 16 | 12 | 11 | 9 | 9 | 7 |
| | Bulk density | | kg/m$^3$ | 39 | 32 | 39 | 37 | 34 | 34 | 32 | 33 | 33 |
| Molding conditions | Filling ratio P | | % | 150 | 178 | 145 | 159 | 164 | 163 | 167 | 163 | 172 |
| | Molding pressure | | MPa(G) | 0.22 | 0.22 | 0.22 | 0.22 | 0.22 | 0.22 | 0.22 | 0.22 | 0.22 |
| Molded article | Density | | kg/m$^3$ | 63 | 60 | 61 | 61 | 59 | 59 | 56 | 55 | 61 |
| | Tensile strength | | kPa | 1062 | 988 | 1019 | 947 | 964 | 988 | 1003 | 973 | 950 |
| | Resilience | | – | A | A | A | A | A | A | A | A | A |
| | Heat aging resistance | Condition 1 | – | A | A | B | – | – | – | – | – | – |
| | | Condition 2 | – | – | – | – | A | A | A | B | B | B |

EP 4 786 532 A1

[Table 5]

(Table 5)

| | | | Unit | Comparative Example 1 | Comparative Example 2 | Comparative Example 3 | Comparative Example 4 |
|---|---|---|---|---|---|---|---|
| Foamed layer | PP(R) | Resin type | – | PP-R7 | PP-R8 | PP-R7 | PP-R9 |
| | | Blend amount | Parts by mass | 96 | 96 | 99 | 99 |
| | PP(A) | Resin type | – | PP-A1 | PP-A2 | PP-A1 | PP-A1 |
| | | Blend amount | Parts by mass | 4 | 4 | 1 | 1 |
| Covering layer | | Ratio in foamed particles | Mass% | 3 | 3 | 3 | 3 |
| Resin particles | | Added amount of the phenol-based antioxidant | Mass ppm | 0 | 0 | 0 | 6151 |
| | | Added amount of the sulfur-based antioxidant | Mass ppm | 0 | 0 | 0 | 1537 |
| | | Added amount of the phosphorus-based antioxidant | Mass ppm | 0 | 0 | 0 | 231 |
| | | Melting point | °C | 143 | 145 | 141 | 146 |
| | | Melt mass-flow rate | g/10 min | 26 | 10 | 65 | 12 |
| | | Content of carbon black | Mass% | 2.8 | 3.9 | 0 | 0 |
| Foamed particles | | Melting enthalpy at the high-temperature peak | J/g | 18 | 20 | 19 | 19 |
| | | Oxidation induction temperature | °C | 210 | 211 | 213 | 288 |
| | | Oxidation induction time | min | 3 | 2 | 2 | 1065 |
| | | Bulk density | kg/m³ | 33 | 34 | 31 | 35 |
| Molding conditions | | Filling ratio P | % | 159 | 158 | 179 | 168 |
| | | Molding pressure | MPa(G) | 0.22 | 0.22 | 0.22 | 0.22 |
| Molded article | | Density | kg/m³ | 55 | 55 | 60 | 60 |
| | | Tensile strength | kPa | 747 | 942 | 890 | 1017 |
| | | Resilience | – | A | A | A | C |
| | Heat aging resistance | Condition 1 | – | C | C | – | – |
| | | Condition 2 | – | – | – | C | A |

As shown in Table 4, the blend ratio of recycled polypropylene-based resin (R) in the foamed particles of Examples 1 to 9 is 50 mass% or more. Moreover, the oxidation induction time of these foamed particles ranges from 5 minutes to 360 minutes. Thus, these foamed particles exhibited excellent heat aging resistance and were able to suppress deterioration in the physical properties of the molded article over a long period, despite containing recycled polypropylene-based resin (R) as a main component. Therefore, the molded articles of the examples can be used for an extended period even in severer usage environments.

In contrast, as shown in Table 5, the oxidation induction time of the foamed particles in Comparative Examples 1 to 3 is less than 5 minutes. As a result, when molded articles produced from these foamed particles were exposed to a high-temperature environment, the physical properties of the molded articles deteriorated relatively quickly.

Moreover, the oxidation induction time of the foamed particles in Comparative Example 4 exceeds 360 minutes. Therefore, the molded article produced from these foamed particles exhibited poor resilience and experienced deformation after in-mold molding.

While the aspects of the polypropylene-based resin foamed particles have been described above based on the examples, the specific aspects of the polypropylene-based resin foamed particles according to the present invention are not limited to those of examples, with various modifications capable of being created without departing from the spirit of the invention.

[Explanation of the Symbols]

t1: Time at which oxygen supply into the furnace begins

t2 Time at the onset of oxidative decomposition of the sample

t3: Intersection of the baseline and the tangent line

t4 Time at which the slope of the tangent is maximal

t5 Time corresponding to the apex of the exothermic peak

t Oxidation induction time

L1 Extension of the baseline of the oxidation induction time curve extended from the time t2

L2 Tangent to the oxidation induction time curve at the time t4

**Claims**

1. Polypropylene-based resin foamed particles, comprising 50 mass% or more of a recycled polypropylene-based resin (R),

   wherein the oxidation induction time of the foamed particles at 200°C, as measured in accordance with ISO 11357-6:2018, is 5 minutes or more and 360 minutes or less.

2. The polypropylene-based resin foamed particles according to claim 1, wherein the content of carbon black in the polypropylene-based resin (R) is less than 0.5 mass% (including 0).

3. The polypropylene-based resin foamed particles according to claim 1 or 2, wherein the content of carbon black in the foamed particles is 0.5 mass% or more and 5 mass% or less.

4. The polypropylene-based resin foamed particles according to claim 1 or 2, wherein the content of carbon black in the foamed particles is less than 0.5 mass% (including 0).

5. The polypropylene-based resin foamed particles according to any one of the claims 1 to 4, wherein the melting point of the polypropylene-based resin (R) is 150°C or lower.

6. The polypropylene-based resin foamed particles according to any one of the claims 1 to 5, wherein the melt mass flow rate of the polypropylene-based resin (R), measured under the conditions of a 2.16 kg load and a temperature of 230°C, is 5 g/10 min or more and 20 g/10 min or less.

7. The polypropylene-based resin foamed particles according to any one of the claims 1 to 6, wherein the content of phenol-based antioxidants in the foamed particles is 0.005 mass% or more and 0.5 mass% or less.

8. The polypropylene-based resin foamed particles according to any one of the claims 1 to 7, wherein the content of phosphorus-based antioxidants in the foamed particles is 0.001 mass% or more and 0.3 mass% or less.

9. The polypropylene-based resin foamed particles according to any one of the claims 1 to 8, wherein the polypropylene-based resin (R) is derived from a post-consumer material of a polypropylene-based resin foamed molded article.

10. The polypropylene-based resin foamed particles according to any one of the claims 1 to 9, wherein the polypropylene-based resin (R) is composed of one or more polypropylene-based resins selected from the group consisting of ethylene-propylene random copolymers, propylene-butene random copolymers, and ethylene-propylene-butene random copolymers.

11. The polypropylene-based resin foamed particles according to any one of the claims 1 to 10, wherein the foamed particles contain a polypropylene-based resin (A) composed of a virgin polypropylene-based resin, the blend ratio of the polypropylene-based resin (A) in the foamed particles is 0.5 mass% or more and 50 mass% or less, and the blend ratio of the polypropylene-based resin (R) is 50 mass% or more and 99.5 mass% or less (provided that the total of the blend ratios of the polypropylene-based resin (R) and the polypropylene-based resin (A) is 100 mass%.)

12. The polypropylene-based resin foamed particles according to any one of the claims 1 to 11, wherein the foamed particles contain 75 mass% or more of the polypropylene-based resin (R).

13. The polypropylene-based resin foamed particles according to any one of the claims 1 to 12, wherein the oxidation induction time of the foamed particles, as measured in accordance with ISO 11357-6:2018, is 30 minutes or more and 360 minutes or less.

[Fig. 1]

(Fig. 1)

[Fig. 2]

(Fig. 2)

[Fig. 3]

(Fig. 3)

Europäisches Patentamt
European Patent Office
Office européen des brevets

# EUROPEAN SEARCH REPORT

Application Number

EP 25 19 0647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/057883 A1 (JSP CORP [JP]) 21 March 2024 (2024-03-21) * example 6; table 1 * & EP 4 588 967 A1 (JSP CORP [JP]) 23 July 2025 (2025-07-23) * example 6; table 1 * * paragraphs [0007], [0049], [0052], [0088]; example comp 1 * ----- | 1-13 | INV. C08J9/00 B29C44/34 C08J9/18 |
| Y | WO 94/07951 A1 (CIBA GEIGY AG [CH]; HOFFMANN KURT [DE] ET AL.) 14 April 1994 (1994-04-14) * page 2, last paragraph * * page 23, last paragraph; examples 1-3 * ----- | 1-13 | |

**TECHNICAL FIELDS SEARCHED (IPC)**

C08J
B29C

The present search report has been drawn up for all claims

| Place of search | Date of completion of the search | Examiner |
|---|---|---|
| The Hague | 8 January 2026 | Mayer, Anne |

EPO FORM 1503 03.82 (P04C01)

## ANNEX TO THE EUROPEAN SEARCH REPORT
## ON EUROPEAN PATENT APPLICATION NO.

EP 25 19 0647

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2026

| Patent document cited in search report | | | Publication date | Patent family member(s) | | | Publication date |
|---|---|---|---|---|---|---|---|
| WO 2024057883 | A1 | | 21-03-2024 | CN | 119855865 | A | 18-04-2025 |
| | | | | EP | 4588967 | A1 | 23-07-2025 |
| | | | | JP | 2024041662 | A | 27-03-2024 |
| | | | | KR | 20250067815 | A | 15-05-2025 |
| | | | | WO | 2024057883 | A1 | 21-03-2024 |
| WO 9407951 | A1 | | 14-04-1994 | AU | 682008 | B2 | 18-09-1997 |
| | | | | BR | 9307107 | A | 25-05-1999 |
| | | | | CA | 2143670 | A1 | 14-04-1994 |
| | | | | CN | 1084529 | A | 30-03-1994 |
| | | | | EP | 0662105 | A1 | 12-07-1995 |
| | | | | JP | 3885174 | B2 | 21-02-2007 |
| | | | | JP | H08501595 | A | 20-02-1996 |
| | | | | KR | 950703607 | A | 20-09-1995 |
| | | | | US | 6251972 | B1 | 26-06-2001 |
| | | | | WO | 9407951 | A1 | 14-04-1994 |
| | | | | ZA | 937074 | B | 25-03-1994 |

EPO FORM P0459

For more details about this annex : see Official Journal of the European Patent Office, No. 12/82

**REFERENCES CITED IN THE DESCRIPTION**

**Patent documents cited in the description**

- JP 2005297464 A